# EUROPEAN PATENT APPLICATION

(11) **EP 4 513 593 A1**
(43) Date of publication of application: **26.02.2025**
(21) Application number: 24182678.3
(22) Date of filing: 17.06.2024
(51) Int. Cl.: H01M 4/36, H01M 4/505, H01M 4/58, H01M 10/052, H01M 10/0587, H01M 4/525, H01M 4/136, H01M 4/131, H01M 4/02

(54) **SECONDARY BATTERY**

(30) Priority: 22.08.2023 KR 20230109712
(71) Applicant: SAMSUNG SDI CO., LTD., Giheung-gu Yongin-si, Gyeonggi-do 17084 (KR)
(72) Inventor: KIM, Jae Hyung, 17084 Yongin-si (KR); LEE, Hyung Dong, 17084 Yongin-si (KR)
(74) Representative: Marks & Clerk LLP

(57) **Abstract**

A secondary battery (100) includes an electrode assembly (110) in which a negative electrode plate (111), a separator (113), and a positive electrode plate (112) are laminated and wound; and an exterior material (120) accommodating the electrode assembly (110), wherein the positive electrode plate (112) includes a conductive base material layer (1111) having first (1121a) and second surfaces (1121b), the second surface (1121b) being an opposite surface of the first surface (1121a), a first functional layer (1122) on the first surface of the conductive base material layer (1111), a first electrically active material layer (1123) on the first functional layer (1122), a first insulating layer (1124) on the first surface of the conductive base material layer (1121a), the first insulating layer (1124) being spaced apart from the first functional layer (1122) and the first electrically active material layer (1123), and a first lamination tape (1125) covering a part of the first functional layer (1122), the first electrically active material layer (1123), the first insulating layer (1124), and the first surface of the conductive base material layer (1121a).

## Description

### BACKGROUND

### 1. Field

The present disclosure relates to a secondary battery.

### 2. Description of the Related Art

A secondary battery is a battery which can be charged and discharged, unlike a primary battery which cannot be charged. A low-capacity secondary battery may be used in small portable electronic devices such as smartphones, feature phones, tablet computers, laptop computers, digital cameras, and camcorders, and a large-capacity secondary battery is widely used as a motor driving power source, a power storage battery, and the like, in hybrid vehicles, electric vehicles, and the like.

Such secondary batteries may include an electrode assembly composed of or including a negative electrode, a separator, and a positive electrode, a case which accommodates the same, and an electrode terminal connected to the electrode assembly. Secondary batteries can be classified into circular types, prismatic types, pouch types, and the like, according to their shape.

The above-described information disclosed in the background technology of the present disclosure is only for improving understanding of the background of the present disclosure, and accordingly, may include information that does not constitute the related art.

### SUMMARY

The present disclosure is directed to providing a secondary battery having an extended lifespan.

A secondary battery according to the present disclosure includes: an electrode assembly in which a negative electrode plate, a separator, and a positive electrode plate are laminated and wound; and an exterior material accommodating (e.g. configured to accommodate) the electrode assembly, wherein the positive electrode plate includes a conductive base material layer having a first surface and a second surface, the second surface being an opposite surface of the first surface, a first functional layeron (e.g. coated on) the first surface of the conductive base material layer, a first electrically active material layer on (e.g. coated on) the first functional layer, a first insulating layer on (e.g. coated on) the first surface of the conductive base material layer, the first insulating layer being spaced apart from the first functional layer and the first electrically active material layer, and a first lamination tape covering (e.g. configured to cover) at least a part of the first functional layer, the first electrically active material layer, the first insulating layer, and the first surface of the conductive base material layer.

In some examples, an end of the first functional layer may extend from and/or beyond an end of the first electrically active material layer.

In some examples, an end of the first functional layer may be the same as and/or aligned with an end of the first electrically active material layer.

In some examples, the first lamination tape may be in contact with the first functional layer.

In some examples, a width of the first lamination tape may be larger than a width of the positive electrode plate.

In some examples, the secondary battery (e.g. the positive electrode plate) may further include a second insulating layer on (e.g. coated on) the second surface of the conductive base material layer.

In some examples, the secondary battery (e.g. the positive electrode plate) may further include a second lamination tape attached to a region of the second insulating layer corresponding to and/or underlying the first lamination tape.

In some examples, an area of the second lamination tape may be the same as an area of the first lamination tape.

In some examples, a region of the first functional layer exposed through and/or by the first electrically active material layer may be sealed by the first lamination tape and the second lamination tape.

In some examples, the secondary battery (e.g. the positive electrode plate) may further include a second functional layer on (e.g. coated on) the second surface of the conductive base material layer in a region spaced apart from the second insulating layer, a second electrically active material layer on (e.g. coated on) the second functional layer, and a third lamination tape covering (e.g. configured to cover) at least a part of the second functional layer, the second electrically active material layer, the second insulating layer, and the second surface of the conductive base material layer.

In some examples, an end of the second functional layer may extend from and/or beyond an end of the second electrically active material layer.

In some examples, an end of the second functional layer may be the same as and/or aligned with an end of the second electrically active material layer.

In some examples, at least one of the first lamination tape, the second lamination tape, and the third lamination tape may include polyethylene terephthalate (PET) or polyimide (PI).

In some examples, at least one of the first functional layer and the second functional layer may include a lithium iron phosphate (LFP); at least one of the first electrically active material layer and the second electrically active material layer may include lithium cobalt oxide (LCO), nickel cobalt manganese (NCM), or nickel cobalt aluminum (NCA); and at least one of the first insulating layer and the second insulating layer may include a ceramic.

In some examples, a positive electrode tab may be connected to the positive electrode plate and extend to the outside of the exterior material, and a negative electrode tab may be connected to the negative electrode plate and extend to the outside of the exterior material. The electrode assembly may further include the positive electrode and the negative electrode tab.

At least some of the above and other features of the invention are set out in the claims.

### BRIEF DESCRIPTION OF THE DRAWINGS

The above and other objects, features and advantages of the present disclosure will become more apparent to those of ordinary skill in the art by describing in detail example embodiments thereof with reference to the accompanying drawings, in which:
FIG. 1 is an exploded perspective view illustrating an example secondary battery according to the present disclosure;
FIG. 2 is a cross-sectional view illustrating an example electrode assembly according to the present disclosure;
FIGS. 3A and 3B are views illustrating a first surface (e.g. inner surface) and a second surface (e.g. outer surface) of an example electrode plate according to the present disclosure; and
FIGS. 4A and 4B are cross-sectional views of the example electrode plate according to the present disclosure.

### DETAILED DESCRIPTION

Embodiments will now be described more fully hereinafter with reference to the accompanying drawingsThe embodiments of the present disclosure are provided to more completely describe the present disclosure to those skilled in the art, the following embodiments may be modified into various other forms, and the scope of the present disclosure not limited to the following embodiments. Rather, these embodiments are provided to make the present disclosure more meaningful and complete, and to fully convey the the present disclosure to those skilled in the art.

Further, in the following drawings, a thickness and a size of each layer are exaggerated for convenience and clarity of description, and the same reference numerals indicate the same elements in the drawings. As used in the present specification, the term "and/or" includes any one of and all combinations of one or more of the listed items. Further, the meaning of "being connected" in the present specification refers to not only a case in which member A and member B are directly connected, but also a case in which member C is interposed between member A and member B to indirectly connect member A and member B.

The terms used in the present specification are used to describe specific embodiments and are not intended to limit the present disclosure. As used in the present specification, a singular form may include a plural form unless the context clearly indicates otherwise. Further, when used in the present specification, "comprise" and/or "comprising" specify(ies) the presence of mentioned features, numbers, steps, operations, members, elements and/or groups thereof, and do(es) not exclude the presence or addition of one or more other features, numbers, steps, operations, members, elements and/or groups.

Although the terms first, second, and the like are used in the present specification to describe various members, components, regions, layers and/or parts, it is clear that these members, components, regions, layers and/or parts should not be limited by these terms. These terms are used only to distinguish one member, component, region, layer, or part from another member, component, region, layer, or part. Accordingly, a first member, component, region, layer, or part to be described later may refer to a second member, component, region, layer, or part without departing from teachings of the present disclosure.

Spatially-related terms such as "beneath," "below," "lower," "above," and "upper" are used for easy understanding of one element or feature and another element or feature shown in the drawings. These spatially-related terms are provided for easy understanding of the present disclosure according to various process states or usage states of the present disclosure, and are not intended to limit the present disclosure. For example, when the elements or features in the drawings are reversed, an element described as "lower" or "below" "becomes "upper" or "above." Accordingly, "below" is a concept encompassing "above" or "below."

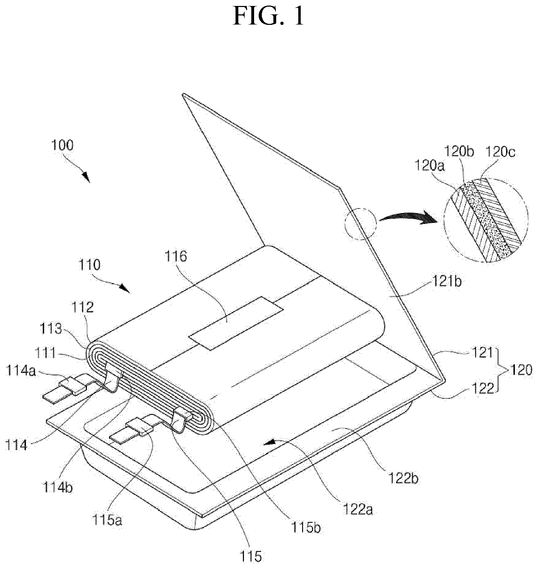

In FIG. 1, an exploded perspective view of an example secondary battery 100 according to the present disclosure is shown. As shown in FIG. 1, the secondary battery 100 according to the present disclosure may include an electrode assembly 110 and an exterior material 120.

The electrode assembly 110 may include a negative electrode plate 111, a positive electrode plate 112, and a separator 113 between (e.g. interposed between) the negative electrode plate 111 and the positive electrode plate 112. The electrode assembly 110 may be configured or formed by laminating the separator 113, the negative electrode plate 111, the separator 113, and the positive electrode plate 112 and winding the separator 113, the negative electrode plate 111, the separator 113, and the positive electrode plate 112 in a jelly roll form.

A negative electrode tab 114 may be electrically coupled to the negative electrode plate 111 and extend to the outside of the exterior material 120. A positive electrode tab 115 may be electrically coupled to the positive electrode plate 112 and extend to the outside of the exterior material 120.

As a partial region of the negative electrode tab 114 may be wrapped by an insulating member 114a, the insulating member 114a may be in contact with a sealing region of the exterior material 120, and the negative electrode tab 114 may not be electrically short-circuited with the exterior material 120. As a partial region of the negative electrode plate 111 and a partial region of the negative electrode tab 114 may be wrapped together by an insulating member 114b, and the negative electrode plate 111 and the negative electrode tab 114 may not be electrically short-circuited with the positive electrode plate 112 of an opposite polarity.

As a partial region of the positive electrode tab 115 may be wrapped by an insulating member 115a, and the insulating member 115a may be in contact with the sealing region of the exterior material 120, the positive electrode tab 115 may not be electrically short-circuited with the exterior material 120. As a partial region of the positive electrode plate 112 and a partial region of the positive electrode tab 115 may be wrapped together by an insulating member 115b, the positive electrode plate 112 and the positive electrode tab 115 may not be electrically short-circuited with the negative electrode plate 111 of an opposite polarity.

As a finishing tape 116 may be adhered to an outermost partial region (for example, a winding finish region) of the electrode assembly 110 wound in a jelly roll form, a wound shape of the electrode assembly 110 may be maintained without being unwound.

The exterior material 120 may accommodate (e.g. may be provided to accommodate) the electrode assembly 110 and seal an outer circumference of the electrode assembly 110. The exterior material 120 may include or be referred to as a case, can, or pouch.

The pouch exterior material 120 may include a first exterior portion 121 and a second exterior portion 122 of which one end is connected to the first exterior portion 121. The first exterior portion 121 may be in contact with one side of the electrode assembly 110, and the second exterior portion 122 may include a recess 122a that accommodates the other side of the electrode assembly 110. In some examples, the first exterior portion 121 may also include a recess that accommodates a partial region of the electrode assembly 110.

As circumferences or peripheral regions of the first and second exterior portions 121 and 122 corresponding to the outer circumference of the electrode assembly 110 may be thermally fused with each other, the electrode assembly 110 may be accommodated in the exterior material 120, which is an approximately pouch or pocket type. The pouch exterior material 120 may be formed by bending an integrally formed quadrangular plate-shaped exterior plate in approximately the middle based on a longitudinal direction of one side to form the first exterior portion 121 and the second exterior portion 122. The second exterior portion 122 may be provided with the recess (or cavity) 122a of a certain depth in which the electrode assembly 110 may be accommodated through press or drawing processing or the like, and sealing portions 121b and 122b may be at (e.g. provided at) an outer circumference of the recess 122a for sealing the first and second exterior portions 121 and 122 to each other. The sealing portions 121b and 122b may be molded along one side where the first and second exterior portions 121 and 122 are in integral contact with each other and the remaining three sides.

The pouch exterior material 120 may include a multilayer or laminate structure having a first insulating layer 120a, a metal layer 120b, and a second insulating layer 120c. In some examples, an adhesive layer or a functional layer may be added.

The first insulating layer 120a may be an inner side surface of the pouch exterior material 120 and may be provided by or include a material having an insulating property and a thermally adhesive property. The first insulating layer 120a may be on (e.g. formed on) one surface of the metal layer 120b and may configure an inner side surface of the pouch exterior material 120 facing the electrode assembly 110. The first insulating layer 120a may include a non-stretchable polypropylene film (cast polypropylene film) that does not react with an electrolyte or the like. When the electrode assembly 110 is accommodated in the first and second exterior portions 121 and 122 and the first and second exterior portions 121 and 122 are folded to each other, the first insulating layers 120a of the first and second exterior portions 121 and 122 may be in contact with each other. Accordingly, when the sealing portions 121b and 122b are thermally fused, the first insulating layers 120a of the first and second exterior portions 121 and 122 may be in contact with each other, and thus the pouch exterior material 120 may be sealed.

The metal layer 120b is between (e.g. interposed between) the first insulating layer 120a and the second insulating layer 120c and may prevent or help prevent moisture and oxygen from entering from the outside, and may prevent or help prevent the electrolyte filled in the pouch exterior material 120 from leaking to the outside. The metal layer 120b may maintain or help maintain the mechanical strength of the pouch exterior material 120. The metal layer 120b may include aluminum, an aluminum alloy, iron, or an iron alloy.

The second insulating layer 120c may be an outer side surface of the pouch exterior material 120, and may alleviate or help alleviate mechanical and chemical impacts from external electronic devices. The second insulating layer 120c is provided on the other side of the metal layer 120b and may configure an outer side surface of the pouch exterior material 120. The second insulating layer 120c may include nylon, polyethylene terephthalate (PET), polybutylene terephthalate (PBT), or polybutylene naphthalate (PBN).

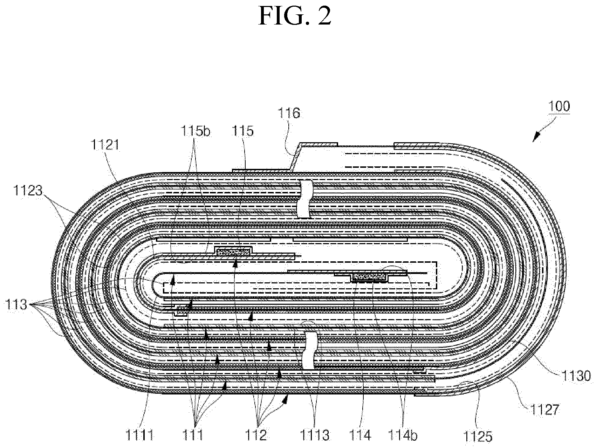

Referring to FIG. 2, a cross-sectional view of the example electrode assembly 110 according to the present disclosure is shown. In FIG. 2, the electrode assembly 110 is shown in a loosely unwound state for understanding of the present disclosure. As shown in FIG. 2, the electrode assembly 110 may be configured by winding the separator 113, the negative electrode plate 111, the separator 113, and the positive electrode plate 112 in a jelly roll form in a state in which the separator 113, the negative electrode plate 111, the separator 113, and the positive electrode plate 112 are laminated. A region of the electrode assembly 110 where winding starts (generally, a center region of the electrode assembly) may be defined or referred to as a winding front end, and a region where the winding ends (generally, the outermost region of the electrode assembly) may be defined or referred to as a winding finish end.

The negative electrode tab 114 may be connected to a winding front end region of the negative electrode plate 111, and the negative electrode tab 114 and a partial region of the negative electrode plate 111 around the negative electrode tab 114 may be wrapped by the insulating member 114b. The positive electrode tab 115 may be connected to a winding front end region of the positive electrode plate 112, and the positive electrode tab 115 and a partial region of the positive electrode plate 112 around the positive electrode tab 115 may be wrapped by the insulating member 115b. The negative electrode tab 114 and the positive electrode tab 115 may be at (e.g. located in) an approximate center region of the electrode assembly 110. A partial region of the positive electrode plate 112, which is wound at least once, may be at (e.g. located in) approximately the outermost region of the electrode assembly 110. The finishing tape 116 may be attached to the winding finish end of the positive electrode plate 112.

The negative electrode plate 111 may include a conductive base material layer 1111 formed of, e.g., a copper or nickel foil or mesh, and negative electrode electrically active material layers 1113 on (e.g. coated on) both surfaces of the conductive base material layer 1111. The conductive base material layer 1111 may include or be referred to as a negative electrode current collector plate. The negative electrode electrically active material layer 1113 may include, e.g., a carbon material, Si, Sn, tin oxide, a tin alloy composite, a transition metal oxide, lithium metal nitrite, or a metal oxide. A region of the negative electrode current collector plate 1111 not coated with the negative electrode electrically active material layer 1113 may be defined or referred to as a negative electrode uncoated portion. The above-described approximately flat negative electrode tab 114 may be coupled (for example, welded) to the negative electrode uncoated portion of the negative electrode current collector plate 1111. That is, one end of the negative electrode tab 114 may be electrically connected to the negative electrode uncoated portion, and the other end may protrude and extend to the outside. The negative electrode uncoated portion may be at (e.g. provided at) a winding front end, a winding finish end, or an arbitrary region of the negative electrode plate 111.

The positive electrode plate 112 may include a conductive base material layer 1121 formed of, e.g., an aluminum foil or mesh, and a positive electrode electrically active material layer 1123 on (e.g. coated on) both surfaces of the conductive base material layer 1121. The conductive base material layer 1121 may include or may be referred to as a positive electrode current collector plate. The positive electrode electrically active material layer 1123 may include a chalcogenide compound, for example, lithium cobalt oxide (LCO), nickel cobalt manganese (NCM), or nickel cobalt aluminum (NCA). A region of the positive electrode current collector plate 1121 not coated with the positive electrode active material layer 1123 may be defined or referred to as a positive electrode uncoated portion. The above-described approximately flat positive electrode tab 115 may be coupled (for example, welded) to the positive electrode uncoated portion of the positive electrode current collector plate 1121. That is, one end of the positive electrode tab 115 may be electrically connected to the positive electrode uncoated portion, and the other end may protrude and extend to the outside. The positive electrode uncoated portion may be at (e.g. provided at) a winding front end, a winding finish end, or an arbitrary region of the positive electrode plate 112.

The positive electrode plate 112 may include a first lamination tape 1125 and a second lamination tape 1127 attached to, e.g., the positive electrode uncoated portion of the winding finish end. The positive electrode plate 112 may include a third lamination tape 1130 attached to the positive electrode uncoated portion, e.g., in a region before the winding finish end. The first, second, and third lamination tapes 1125, 1127, and 1130 may overlap each other in a horizontal width direction in the electrode assembly 110.

The positive electrode plate 112 may further include a functional layer (not shown) between (e.g. interposed between) the conductive base material layer 1121 and the positive electrode electrically active material layer 1123, and an insulating layer (not shown) on (coated on) the positive electrode uncoated portion where the positive electrode active material layer 1123 is not coated.

The separator 113 may be between (e.g. interposed between) the negative electrode plate 111 and the positive electrode plate 112 to prevent or help prevent an electrical short circuit between the negative electrode plate 111 and the positive electrode plate 112. A pair of separators 113 may be provided, and the negative electrode plate 111 may be held between the pair of separators 113. The separator 113 may include polyethylene, polypropylene, or a porous copolymer of the polyethylene and the polypropylene. In order to prevent or help an electrical short circuit between the negative electrode plate 111 and the positive electrode plate 112, a width of the separator 113 may be wider than widths of the negative electrode plate 111 and the positive electrode plate 112.

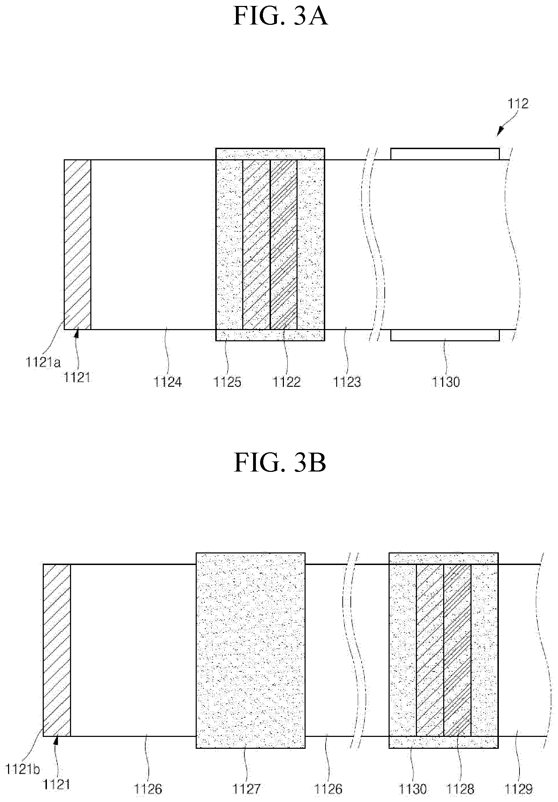

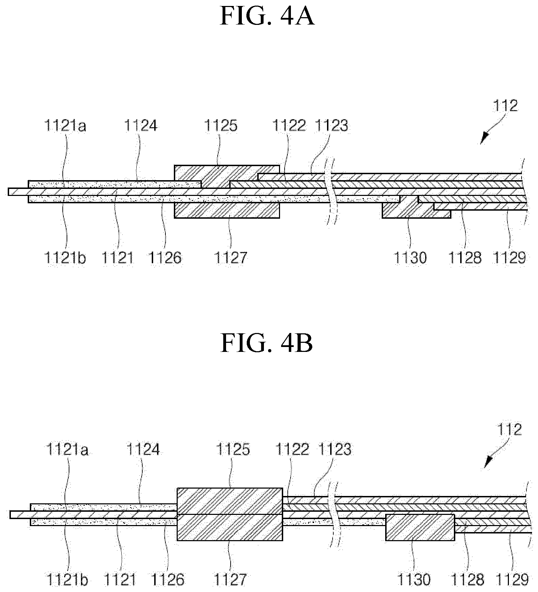

Referring to FIGS. 3A and 3B, a first surface 1121a (for example, an inner surface) and a second surface 1121b (for example, an outer surface) of an example electrode plate (for example, the positive electrode plate 112) according to the present disclosure are shown, and referring to FIGS. 4A and 4B, cross-sectional views of an example electrode plate (for example, the positive electrode plate 112) according to the present disclosure are shown. The electrode plate 112 shown here generally represents a winding finish end region of the electrode assembly 110.

As shown in FIGS. 3A, 3B, 4A, and 4B, the positive electrode plate 112 may include the conductive base material layer 1121, a first functional layer 1122, the first electrically active material layer 1123, a first insulating layer 1124, and the first lamination tape 1125.

The conductive base material layer 1121 may include the first surface 1121a and the second surface 1121b, which is an opposite surface of the first surface 1121a. The first functional layer 1122 may be on (e.g. coated on) the first surface 1121a of the conductive base material layer 1121. The first electrically active material layer 1123 may be on (e.g. coated on) the first functional layer 1122. The first insulating layer 1124 may be on (e.g. coated on) the first surface 1121a (for example, a positive electrode uncoated portion) of the conductive base material layer 1121 spaced apart from the first functional layer 1122 and the first electrically active material layer 1123. The first lamination tape 1125 may directly cover (e.g. at least part of) the first functional layer 1122, the first electrically active material layer 1123, the first insulating layer 1124, and the first surface 1121a of the conductive base material layer 1121 (for example, at least a portion of the positive electrode uncoated portion between the first functional layer 1122 and the first insulating layer 1124).

An end of the first functional layer 1122 may extend from (e.g., may extend farther than) an end of the first electrically active material layer 1123. In other words, an end region of the first functional layer 1122 may be exposed from or beyond an end of the first electrically active material layer 1123. A distance from the end of the first functional layer 1122 to the first insulating layer 1124 may be less than a distance from the end of the first electrically active material layer 1123 to the first insulating layer 1124 (e.g., as measured in a same direction). An end position of the first functional layer 1122 may be the same as, e.g., may be aligned with, an end position of the first electrically active material layer 1123.

The first lamination tape 1125 may be in direct contact with the first functional layer 1122. A width of the first lamination tape 1125 may be larger than a width of the positive electrode plate 112. Accordingly, the first functional layer 1122 may be isolated from the electrolyte by or due to the first lamination tape 1125. Accordingly, the first functional layer 1122 may not react with the electrolyte and thus may not generate side reaction by-products. Further, the first lamination tape 1125 may be in direct contact with each of the first electrically active material layer 1123, the first insulating layer 1124, and the first surface 1121a of the conductive base material layer 1121 in addition to the first functional layer 1122. Specifically, as the first lamination tape 1125 may cover a partial region of the first insulating layer 1124 adjacent to the first functional layer 1122, the first insulating layer 1124 may not be contaminated with the side reaction by-products due to the first functional layer 1122 and the electrolyte.

The positive electrode plate 112 may further include a second insulating layer 1126 on (e.g. coated on) the second surface 1121b of the conductive base material layer 1121. The positive electrode plate 112 may further include the second lamination tape 1127 attached to a region of the second insulating layer 1126 corresponding to, underlying, or aligned with the first lamination tape 1125. An area, size and/or shape of the second lamination tape 1127 may be the same as an area, size and/or shape of the first lamination tape 1125.

All regions of the first functional layer 1122 exposed through or by the first electrically active material layer 1123 may be sealed by the first and second lamination tapes 1125 and 1127. As the regions (e.g. an upper surface and side surfaces) of the first functional layer 1122 exposed through the first electrically active material layer 1123 may be completely sealed by the first and second lamination tapes 1125 and 1127, the first functional layer 1122 may not come into contact with the electrolyte. Likewise, since the first functional layer 1122 may not come into contact with the electrolyte, elution of the first functional layer 1122 due to contact with the electrolyte does not occur. In other words, the first functional layer 1122 may not react with the electrolyte and generate side reaction by-products. Accordingly, since an elution phenomenon of the first functional layer 1122 may be suppressed, such that the electrolyte is not unnecessarily consumed, a contamination phenomenon of the first insulating layer 1124 due to the side reaction by-products may not occur, and battery life may ultimately increase.

The positive electrode plate 112 may further include a second functional layer 1128 on (e.g. coated on) the second surface 1121b of the conductive base material layer 1121 in a region spaced apart from the second insulating layer 1126 and may also further include a second electrically active material layer 1129 on (coated on) the second functional layer 1128. The positive electrode plate 112 may include the third lamination tape 1130, which may (e.g., at least partially) cover the regions of the second functional layer 1128, the second electrically active material layer 1129, the second insulating layer 1126, and the second surface 1121b of the conductive base material layer 1121.

An end of the second functional layer 1128 may extend from or beyond an end of the second electrically active material layer 1129. An end position of the second functional layer 1128 may be the same as an end position of the second electrically active material layer 1129.

Only a winding finish end region of the first functional layer 1122 at (e.g. located in) a winding finish region may be exposed from or beyond the first electrically active material layer 1123, and all of the remaining regions may be covered by the first electrically active material layer 1123. Accordingly, the winding finish end region of the first functional layer 1122 exposed through or by the first electrically active material layer 1123 may be sealed by the first and second lamination tapes 1125 and 1127. Only a winding finish end region of the second functional layer 1128 may be exposed from or by the second electrically active material layer 1129, and all of the remaining regions may be covered by the second electrically active material layer 1129. Accordingly, the winding finish end region of the second functional layer 1128 exposed through or by the second electrically active material layer 1129 may be sealed by the third lamination tape 1130.

At least one of the first, second, and third lamination tapes 1125, 1127, and 1130 may include polyethylene terephthalate (PET) or polyimide (PI), which may not react with the electrolyte.

At least one of the first and second functional layers 1122 and 1128 may include lithium iron phosphate (LFP). This LFP layer may be between (e.g. interposed between) the conductive base material layer 1121 and the first and second electrically active material layers 1123 and 1129 to reduce or help reduce electrical resistance and suppress or help a heat generation phenomenon. At least one of the first and second electrically active material layers 1123 and 1129 may include lithium cobalt oxide (LCO), nickel cobalt manganese (NCM), or nickel cobalt aluminum (NCA). Such electrically active materials may allow the secondary battery 100 to be charged and discharged as lithium ions are intercalated or deintercalated. At least one of the first and second insulating layers 1124 and 1126 may include a ceramic. This ceramic may improve or help improve battery safety by preventing the positive electrode conductive base material layer 1121 from being directly electrically short-circuited with the negative electrode conductive base material layer 1111.

As the functional layer including LFP may be isolated from the electrolyte by the lamination tape, elution of the LFP from the functional layer when the secondary battery is charged or discharged or the secondary battery is left in a high temperature and high humidity environment may be prevented. If the functional layer were to meet the electrolyte and be eluted, since a total amount of electrolyte, which moves lithium ions, could decrease and ceramic characteristics could also deteriorate, battery life could ultimately decrease.

The present disclosure can provide a secondary battery having an extended lifespan. In some examples, the present disclosure can provide a secondary battery having an extended lifespan by preventing a functional layer of an electrode assembly from being exposed to and/or reacting with an electrolyte. In some examples, the present disclosure can provide a secondary battery having an extended lifespan by preventing a functional layer of an electrode assembly from eluting into an electrolyte. In some examples, the present disclosure can provide a secondary battery having an extended lifespan by preventing by-products of side reactions between a functional layer and an electrolyte from reaching an insulating layer of an electrode assembly.

Embodiments are set out in the following clauses:
Clause 1. A secondary battery comprising: an electrode assembly in which a negative electrode plate, a separator, and a positive electrode plate are laminated and wound; and an exterior material configured to accommodate the electrode assembly, wherein the positive electrode plate includesa conductive base material layer having a first surface and a second surface, which is an opposite surface of the first surface, a first functional layer coated on the first surface of the conductive base material layer, a first electrically active material layer coated on the first functional layer, a first insulating layer coated on the first surface of the conductive base material layer spaced apart from the first functional layer and the first electrically active material layer, and a first lamination tape configured to cover the first functional layer, the first electrically active material layer, the first insulating layer, and the first surface of the conductive base material layer.
Clause 2. The secondary battery of clause 1, wherein an end of the first functional layer extends from an end of the first electrically active material layer.
Clause 3. The secondary battery of clause 1, wherein an end of the first functional layer is the same as an end of the first electrically active material layer.
Clause 4. The secondary battery of clause 1, wherein the first lamination tape is in contact with the first functional layer.
Clause 5. The secondary battery of clause 1, wherein a width of the first lamination tape is larger than a width of the positive electrode plate.
Clause 6. The secondary battery of clause 1, further comprising a second insulating layer coated on the second surface of the conductive base material layer.
Clause 7. The secondary battery of clause 6, further comprising a second lamination tape attached to a region of the second insulating layer corresponding to the first lamination tape.
Clause 8. The secondary battery of clause 6, wherein an area of the second lamination tape is the same as an area of the first lamination tape.
Clause 9. The secondary battery of clause 6, wherein a region of the first functional layer exposed through the first electrically active material layer is sealed by the first and second lamination tapes.
Clause 10. The secondary battery of clause 6, further comprising a second functional layer coated on the second surface of the conductive base material layer in a region spaced apart from the second insulating layer, a second electrically active material layer coated on the second functional layer, and a third lamination tape configured to cover the second functional layer, the second electrically active material layer, the second insulating layer, and the second surface of the conductive base material layer.
Clause 11. The secondary battery of clause 10, wherein an end of the second functional layer extends from an end of the second electrically active material layer.
Clause 12. The secondary battery of clause 10, wherein an end of the second functional layer is the same as an end of the second electrically active material layer.
Clause 13. The secondary battery of clause 10, wherein the first, second, and third lamination tapes include polyethylene terephthalate (PET) or polyimide (PI).
Clause 14. The secondary battery of clause 10, wherein the first and second functional layers include lithium iron phosphate (LFP), the first and second electrically active material layers include lithium cobalt oxide (LCO), nickel cobalt manganese (NCM), or nickel cobalt aluminum (NCA), and the first and second insulating layers include a ceramic.
Clause 15. The secondary battery of clause 1, wherein a positive electrode tab is connected to the positive electrode plate and extends to the outside of the exterior material, and a negative electrode tab is connected to the negative electrode plate and extends to the outside of the exterior material.

The above-descriptions are only one embodiment for implementing the secondary battery according to the present disclosure, and the present disclosure is not limited to the above-described embodiment, and as claimed in the following claims. Various modifications can be made by one skilled in the art without departing from the invention as set forth in the following claims.

## Claims

1. A secondary battery comprising:
an electrode assembly in which a negative electrode plate, a separator, and a positive electrode plate are laminated and wound; and
an exterior material configured to accommodate the electrode assembly,
wherein the positive electrode plate includes:
a conductive base material layer having a first surface and a second surface, the second surface being an opposite surface of the first surface,
a first functional layer coated on the first surface of the conductive base material layer,
a first electrically active material layer coated on the first functional layer,
a first insulating layer coated on the first surface of the conductive base material layer, the first insulating layer being spaced apart from the first functional layer and the first electrically active material layer, and
a first lamination tape configured to cover the first functional layer, the first electrically active material layer, the first insulating layer, and the first surface of the conductive base material layer.

2. The secondary battery of claim 1, wherein an end of the first functional layer extends from and/or beyond an end of the first electrically active material layer.

3. The secondary battery of claim 1 or 2, wherein an end of the first functional layer is the same as and/or is aligned with an end of the first electrically active material layer.

4. The secondary battery of claim 1, 2 or 3, wherein the first lamination tape is in contact with the first functional layer.

5. The secondary battery of any preceding claim, wherein a width of the first lamination tape is larger than a width of the positive electrode plate.

6. The secondary battery of any preceding claim, further comprising a second insulating layer coated on the second surface of the conductive base material layer.

7. The secondary battery of claim 6, further comprising a second lamination tape attached to a region of the second insulating layer corresponding to the first lamination tape.

8. The secondary battery of claim 7, wherein an area of the second lamination tape is the same as an area of the first lamination tape.

9. The secondary battery of claim 7 or 8, wherein a region of the first functional layer exposed through and/or by the first electrically active material layer is sealed by the first lamination tape and the second lamination tape.

10. The secondary battery of claim 7, 8 or 9, further comprising a second functional layer coated on the second surface of the conductive base material layer in a region spaced apart from the second insulating layer, a second electrically active material layer coated on the second functional layer; and
a third lamination tape configured to cover at least a part of the second functional layer, the second electrically active material layer, the second insulating layer, and the second surface of the conductive base material layer.

11. The secondary battery of claim 10, wherein an end of the second functional layer extends from and/or beyond an end of the second electrically active material layer.

12. The secondary battery of claim 10 or 11, wherein an end of the second functional layer is the same as and/or is aligned with an end of the second electrically active material layer.

13. The secondary battery of claim 10, 11 or 12, wherein at least one of the first lamination tape, the second lamination tape, and the third lamination tape include polyethylene terephthalate (PET) or polyimide (PI).

14. The secondary battery of any one of claims 10 to 13, wherein:
at least one of the first functional layer and the second functional layer include lithium iron phosphate (LFP);
at least one of the first electrically active material layer and the second electrically active material layer include lithium cobalt oxide (LCO), nickel cobalt manganese (NCM), or nickel cobalt aluminum (NCA); and
at least one of the first insulating layer and the second insulating layer include a ceramic.

15. The secondary battery of any preceding claim 1, wherein a positive electrode tab is connected to the positive electrode plate and extends to the outside of the exterior material, and
a negative electrode tab is connected to the negative electrode plate and extends to the outside of the exterior material.
